# EUROPEAN PATENT APPLICATION

(11) **EP 4 621 389 A1**
(43) Date of publication of application: **24.09.2025**
(21) Application number: 25158498.3
(22) Date of filing: 18.02.2025
(51) Int. Cl.: G01N 21/64, G02B 17/00, G02B 27/00

(54) **FLUORESCENCE READING DEVICE AND FLUORESCENCE READING METHOD**

(30) Priority: 18.03.2024 JP 2024042530
(71) Applicant: Yokogawa Electric Corporation, Tokyo 180-8750 (JP)
(72) Inventor: MIYAUCHI, Yuki, Musashino-shi, Tokyo, 180-8750 (JP); SUZUKI, Yasuyuki, Musashino-shi, Tokyo, 180-8750 (JP); TAGUCHI, Tomoyuki, Musashino-shi, Tokyo, 180-8750 (JP)
(74) Representative: Hoffmann Eitle

(57) **Abstract**

Solution: There is provided a fluorescence reading device 100 which acquires fluorescence from a microarray 1, including: a receiving optical system 300 which repeatedly reflects fluorescence emitted from the microarray 1 off a plurality of reflectors 301, 302 to form an image on an image-forming plane; and an optical sensor 107 located on the image-forming plane. The fluorescence reading device may be a telecentric optical system in which an image-capturing plane of the microarray and an image-forming plane are the same in size. The plurality of reflectors may include a convex mirror 301 and a concave mirror 302. The plurality of reflectors may include only one convex mirror 301 and one concave mirror 302.

## Description

### BACKGROUND

### 1. TECHNICAL FIELD

The present invention relates to a fluorescence reading device and a fluorescence reading method.

### 2. RELATED ART

Patent document 1 describes that "fluorescence from the biochip 60 generated by excitation by the laser light enters the CCD camera 13 through the dichroic mirror 3, the dichroic mirror 23, the barrier filter 11 and the optical system 12" (paragraph 0040). Patent document 2 describes that "a relay optical system 51 includes a first mirror 46 having a positive power, a second mirror 47 having a negative power, and a third mirror 48 having a positive power. The light emitted from the rod integrator 45 is totally reflected by the TIR prism 53 via the first mirror 46, the second mirror 47, and the third mirror 48 of the relay optical system 51, and illuminates a DMD (first light modulation element) 49 as the image display panel" (paragraph 0042).

### Prior Art Documents

### Patent document

Patent Document 1: Japanese Patent Application Publication No. 2007-093250
Patent Document 2: Japanese Patent Application Publication No. 2020-052342

### SUMMARY

In a first aspect of the present invention, there is provided a fluorescence reading device which acquires fluorescence from a microarray. The fluorescence reading device includes: a receiving optical system which repeatedly reflects fluorescence emitted from the microarray off a plurality of reflectors to form an image on an image-forming plane; and an optical sensor located on the image-forming plane.

In the fluorescence reading device described above, the fluorescence reading device may be a telecentric optical system in which an image-capturing plane of the microarray and the image-forming plane are the same in size. In any of the fluorescence reading devices described above, fluorescent molecules to be observed may be arranged on a light-receiving plane on the microarray. Any of the fluorescence reading devices described above may include a laser light source which emits laser light for exciting the fluorescent molecules to cause them to emit the fluorescence. Any of the fluorescence reading devices described above may include an irradiation optical system which magnifies and performs beam-shaping on the laser light to uniformly irradiate the observation plane of the microarray with the laser light. Any of the fluorescence reading devices described above may include a mirror which reflects off the light beam-shaped by the irradiation optical system, and a dichroic mirror which reflects off the light reflected by the mirror to irradiate the microarray. In any of the fluorescence reading devices described above, the dichroic mirror may transmit the fluorescence emitted from the microarray to cause it to be incident to the receiving optical system. In any of the fluorescence reading devices described above, the optical sensor may be a CCD camera having a sensor plane which coincides with the image-forming plane. Any of the fluorescence reading devices described above may include a first barrier filter through which the fluorescence emitted from the microarray passes before being incident to the receiving optical system. In any of the fluorescence reading devices described above, the first barrier filter may be arranged between the receiving optical system and the dichroic mirror. In any of the fluorescence reading devices described above, the first barrier filter may transmit only light at a fluorescence wavelength band of the fluorescent molecules and block light other than the fluorescence from the fluorescent molecules. Any of the fluorescence reading devices described above may include a second barrier filter through which the fluorescence emitted from the receiving optical system passes before forming an image on the sensor plane of the optical sensor. In any of the fluorescence reading devices described above, the second barrier filter may be arranged between the receiving optical system and the optical sensor. In any of the fluorescence reading devices described above, the second barrier filter may transmit only light at a fluorescence wavelength band of the fluorescent molecules and block light other than the fluorescence from the fluorescent molecules. In any of the fluorescence reading devices described above, the dichroic mirror, the first barrier filter, and the second barrier filter may be installed to extract only the fluorescence wavelength of the fluorescent molecules observed at the microarray, wherein a transmission wavelength band may be designed depending on a kind of the fluorescent molecules. In any of the fluorescence reading devices described above, the plurality of reflectors may include a reflector other than a spherical mirror. In any of the fluorescence reading devices described above, the plurality of reflectors may include a spherical mirror in which some reflection area does not have a spherical shape.

In any of the fluorescence reading devices described above, the receiving optical system may not include a lens.

In any of the fluorescence reading devices described above, the plurality of reflectors may include a convex mirror and a concave mirror.

In any of the fluorescence reading devices described above, the convex mirror and the concave mirror may each be a spherical mirror.

In any of the fluorescence reading devices described above, the plurality of reflectors may include only one convex mirror, which is identical to the convex mirror, and one concave mirror, which is identical to the concave mirror.

In any of the fluorescence reading devices described above, the plurality of reflectors may include only two convex mirrors, each of which is identical to the convex mirror, and two concave mirrors, each of which is identical to the concave mirror.

In any of the fluorescence reading devices described above, the plurality of reflectors may include only one convex mirror, which is identical to the convex mirror, one concave mirror, which is identical to the concave mirror, and one retroreflector.

In any of the fluorescence reading devices described above, the plurality of reflectors may include only one convex mirror, which is identical to the convex mirror, one concave mirror, which is identical to the concave mirror, and one right-angle reflector.

In a second aspect of the present invention, there is provided a fluorescence reading method for acquiring fluorescence from a microarray. The fluorescence reading method includes: repeatedly reflecting fluorescence emitted from the microarray off a plurality of reflectors in a receiving optical system to form an image on an image-forming plane; and receiving the fluorescence by an optical sensor located on the image-forming plane.

Note that the summary clause does not necessarily describe all necessary features of the embodiments of the present invention. The present invention may also be a sub-combination of the features described above.

### BRIEF DESCRIPTION OF THE DRAWINGS

Fig. 1 schematically illustrates a fluorescence reading device 100 according to a first embodiment.
Fig. 2 schematically illustrates a configuration of a receiving optical system 300 in the fluorescence reading device 100 according to the first embodiment.
Fig. 3 illustrates a result obtained by a simulation using the fluorescence reading device 100 according to the first embodiment.
Fig. 4 schematically illustrates a configuration of a receiving optical system 400 in a fluorescence reading device 102 according to a second embodiment.
Fig. 5 illustrates a result obtained by a simulation using the fluorescence reading device 102 according to the second embodiment.
Fig. 6 illustrates a result obtained by a simulation using the fluorescence reading device 102 according to the second embodiment.
Fig. 7 schematically illustrates a configuration of a receiving optical system 500 in a fluorescence reading device 103 according to a third embodiment.
Fig. 8 schematically illustrates a configuration of the receiving optical system 500 in the fluorescence reading device 103 according to the third embodiment.
Fig. 9 illustrates a result obtained by a simulation using the fluorescence reading device 103 according to the third embodiment.
Fig. 10 illustrates a result obtained by a simulation using the fluorescence reading device 103 according to the third embodiment.
Fig. 11 schematically illustrates a configuration of a receiving optical system 600 in a fluorescence reading device 104 according to a fourth embodiment.
Fig. 12 schematically illustrates a configuration of the receiving optical system 600 in the fluorescence reading device 104 according to the fourth embodiment.
Fig. 13 illustrates a result obtained by a simulation using the fluorescence reading device 104 according to the fourth embodiment.
Fig. 14 illustrates a result obtained by a simulation using the fluorescence reading device 104 according to the fourth embodiment.

### DESCRIPTION OF EXEMPLARY EMBODIMENTS

Hereinafter, embodiments of the present invention will be described. However, the following embodiments do not limit the invention according to the claims. In addition, not all of the combinations of features described in the embodiments are essential to the solution of the invention.

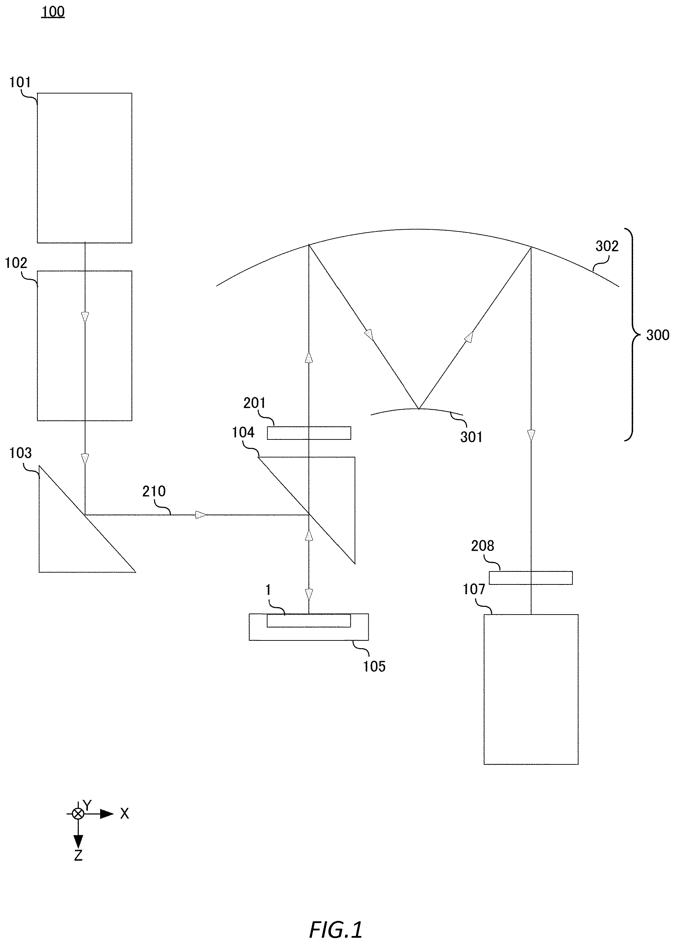

Fig. 1 schematically illustrates a fluorescence reading device 100 according to a first embodiment. Fig. 1 illustrates an X axis, a Y axis, and a Z axis orthogonal to each other. The X axis extends in the left-right direction of the paper plane of the drawing, the Y axis extends in a direction into the paper plane of the drawing, and the Z axis extends in the up-down direction of the paper plane of the drawing. The following drawings will illustrate the X, Y, and Z axes corresponding to them, so the duplicated description thereof will be omitted.

The fluorescence reading device 100 acquires fluorescence from a microarray 1. The fluorescence reading device 100 is a telecentric optical system in which an image-capturing plane of the microarray 1 and an image-forming plane are the same in size. The fluorescence reading device 100 includes a receiving optical system 300 and a CCD camera 107. The CCD camera 107 is an example of an optical sensor and is located on the image-forming plane of the receiving optical system 300. Note that, an optical sensor other than the CCD camera may be located on the image-forming plane of the receiving optical system 300.

The fluorescence reading device 100 according to the first embodiment further includes a laser light source 101, an irradiation optical system 102, a mirror 103, a dichroic mirror 104, a stage 105, a first barrier filter 201, and a second barrier filter 208, as an example.

In the fluorescence reading method according to the first embodiment, as a principal ray 210 illustrated by arrows in Fig. 1, laser light emitted from the laser light source 101 is magnified and is beam-shaped by the irradiation optical system 102 to uniformly irradiate an observation plane of the microarray 1, which is a sample. In the present embodiment, the microarray 1 is a DNA microarray, as an example. The microarray 1 may be, for example, a protein microarray, a glycan microarray, or the like other than the DNA microarray.

The light beam-shaped by the irradiation optical system 102 is reflected off the mirror 103, is reflected off the dichroic mirror 104, and becomes irradiation light which irradiates the microarray 1 mounted on the stage 105. Fluorescent molecules to be observed by the fluorescence reading device 100 are arranged on a light-receiving plane on the microarray 1.

As the principal ray 210 illustrated by the arrows in Fig. 1, the fluorescent molecules on the microarray 1 are excited by the irradiation light to emit fluorescence. The fluorescence from the fluorescent molecules has a very wide angle of divergence and is emitted omnidirectionally. The fluorescence from fluorescent molecules on the microarray 1 transmits the dichroic mirror 104, forms an image on a sensor plane of the CCD camera 107 by way of the receiving optical system 300, and is received at the CCD camera 107, that is, detected as an image by the CCD camera 107. The dichroic mirror 104 transmits a wavelength range of the fluorescence from the fluorescent molecules and reflects a wavelength range other than that, e.g., a wavelength range of illumination light. Note that the sensor plane of the CCD camera 107 coincides with the image-forming plane described above.

The fluorescence from the fluorescent molecules on the microarray 1 passes through the first barrier filter 201 arranged between the receiving optical system 300 and the dichroic mirror 104 before being incident to the receiving optical system 300. Light from the microarray 1 includes not only the fluorescence that is emitted from the fluorescent molecules excited by the irradiation light into the microarray 1 but also light such as reflected light of the irradiation light or autofluorescence that occurs from a substance in a sample other than the fluorescent molecules to be targeted or base material of the microarray. The first barrier filter 201 transmits only light at a fluorescence wavelength band of the fluorescent molecules on the microarray 1 and blocks light other than the fluorescence from the fluorescent molecules.

The fluorescence emitted from the receiving optical system 300 passes through the second barrier filter 208 arranged between the receiving optical system 300 and the CCD camera 107 before forming an image on the sensor plane of the CCD camera 107. Similarly to the first barrier filter 201, the second barrier filter 208 transmits only light at the fluorescence wavelength band of the fluorescent molecules on the microarray 1 and blocks light other than the fluorescence from the fluorescent molecules.

In this manner, the dichroic mirror 104, the first barrier filter 201, and the second barrier filter 208 are installed to extract only the fluorescence wavelength of the fluorescent molecules observed at the microarray 1, wherein a transmission wavelength band is designed depending on a kind of the fluorescent molecules.

The receiving optical system 300 repeatedly reflects fluorescence emitted from the microarray 1 off a plurality of reflectors to form an image on the image-forming plane. The receiving optical system 300 does not include a lens. The plurality of reflectors include a convex mirror 301 and a concave mirror 302. In the present embodiment, the convex mirror 301 and the concave mirror 302 each are a spherical mirror. In the present embodiment, the plurality of reflectors in the receiving optical system 300 include only one convex mirror 301 and one concave mirror 302.

An optical system consisting of the convex mirror 301 and the concave mirror 302 which each are a spherical mirror may be also referred to as an Offner optical system, an Offner reflector optical system, or the like. Note that, although the convex mirror 301 and the concave mirror 302 each are a spherical mirror, the plurality of reflectors in the receiving optical system 300 may also include a reflector other than a spherical mirror as long as it can repeatedly reflect fluorescence emitted from the microarray 1 to form an image on the image-forming plane. For example, the plurality of reflectors in the receiving optical system 300 may also include a retroreflector, a right-angle reflector, or the like described in the plurality of embodiments below. For example, the plurality of reflectors in the receiving optical system 300 may also include a reflector in which some reflection area in the spherical mirror, for example, the reflection area that has little effect when detecting an image of fluorescence from the fluorescent molecules by the CCD camera 107, does not have a spherical shape, that is, the reflector is a substantially spherical mirror. Note that the retroreflector may be also notated as a retro-reflector.

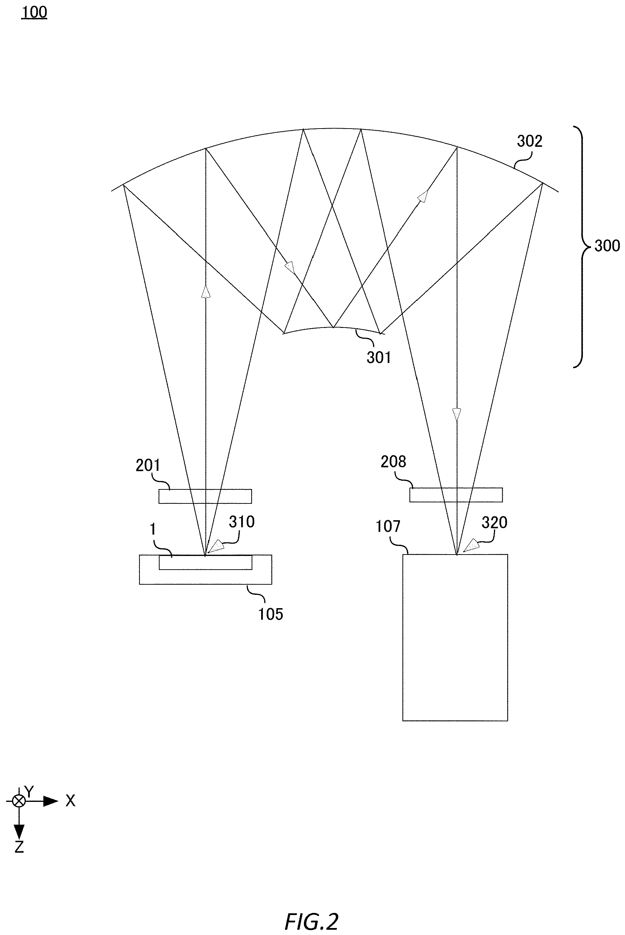

Fig. 2 schematically illustrates a configuration of the receiving optical system 300 in the fluorescence reading device 100 according to the first embodiment. Fig. 2 illustrates fluorescence rays emitted from the fluorescent molecules on the microarray 1, and a light traveling direction of the principal ray is illustrated by arrows. The same applies to the following drawings, and the duplicated description thereof will be omitted.

The observation plane of the microarray 1 is arranged at a focal plane position 310 of the light-receiving plane of the receiving optical system 300. In the receiving optical system 300, the fluorescence emitted from the microarray 1 is first reflected off the concave mirror 302, then reflected off the convex mirror 301, again reflected off the concave mirror 302, and detected by the CCD camera 107 arranged at a focal point position 320 of the image-forming plane. Note that the fluorescence reading device 100 is a telecentric optical system in which the image-capturing plane of the microarray 1 and the image-forming plane are the same in size as described above, and no magnification or minimization is made.

From the above, with the fluorescence reading device 100 according to the first embodiment described using Fig. 1 and Fig. 2, the receiving optical system 300 is composed of a plurality of reflectors which are not influenced by chromatic aberration, that is, a plurality of mirror components. In this way, the fluorescence reading device 100 can be applied for, for example, multi-wavelength detection of microarray, and can precisely acquire an image of the microarray 1 where fluorescent molecules are arranged.

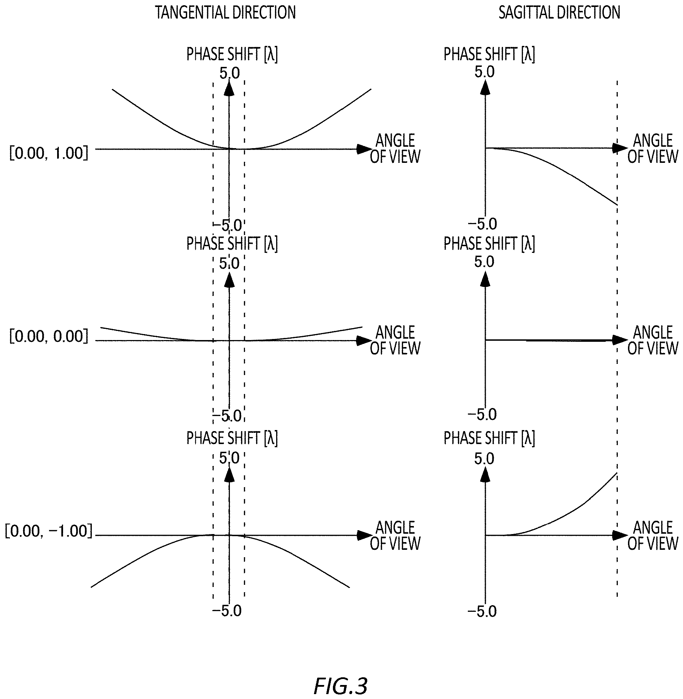

Fig. 3 illustrates a result obtained by a simulation using the fluorescence reading device 100 according to the first embodiment. More specifically, Fig. 3 illustrates a result obtained by a simulation in which the receiving optical system 300 in the fluorescence reading device 100 according to the first embodiment is configured with a radius of the concave mirror 302 of R = 150, a radius of the convex mirror 301 of R = 75, and a numerical aperture of NA = 0.22, wherein R is a radius of a spherical mirror.

Each graph in Fig. 3 illustrates a phase shift (λ) of fluorescence detected at a plurality of coordinate positions on the sensor plane, with a center of the sensor plane of the CCD camera 107 as an origin. More specifically, changes in the phase shift (λ) are illustrated in cases where coordinates of three points moved by (X, Y) = (0.00, 1.00), (0.00, 0.00), and (0.00, -1.00) from the origin on the sensor plane are further shifted respectively in a tangential direction and a sagittal direction, that is, cases where the angle of view is widened. A width of the angle of view in each graph corresponds to a size of an aperture of the optical system.

According to the simulation result in Fig. 3, signs of the phase shifts respectively in the tangential direction and the sagittal direction are opposite to each other in the first embodiment, that is, astigmatism is dominant as aberrations and appears centrosymmetrically. Note that, since the phase shift is centrosymmetric, for the sagittal direction, the illustration of the negative side of the angle of view in each graph is omitted.

Here, a fluorescence reading device of a comparative example including, instead of the receiving optical system 300, a relay lens optical system including two sets of a triplet lens consisting of three lenses is considered compared to the fluorescence reading device 100 according to the present embodiment. More specifically, in the relay lens optical system in the fluorescence reading device of the comparative example, a triplet lens consisting of three lenses as a light-receiving lens group and a triplet lens consisting of three lenses as an image-forming lens group are installed to image the spatial distribution in fluorescence from the fluorescent molecules on the microarray on the sensor plane of the CCD camera to form a fluorescence image. The triplet lenses each have a function for correcting spherical aberration, coma aberration, and astigmatism, which are monochromatic aberrations, as well as chromatic aberration, which is influenced by the wavelength dependency of the refractive index, and correct a shift amount from an ideal image formation in order to generate an image with less blur.

As described above, the fluorescence from the fluorescent molecules on the microarray is emitted omnidirectionally. Therefore, when observing very weak light such as observing fluorescence, the fluorescence reading device of the comparative example allows for high-sensitivity measurement by receiving fluorescence emitted omnidirectionally at the light-receiving lens group in the relay lens optical system covering as wide a range as possible. According to the fluorescence reading device of the comparative example, the light-receiving range of the fluorescence emitted omnidirectionally depends on a numerical aperture NA of a first lens in the light-receiving lens group to which the fluorescence is first incident, where NA is expressed as NA = n·sinθ. Here, n is a refractive index of a medium between the microarray and the first lens, and θ is a maximum angle of incidence of light into the first lens from the microarray. Air is used as the medium and then n = 1.

Such a fluorescence reading device of the comparative example requires the relay lens optical system to be composed of six lenses in order to correct aberrations, thereby increasing the cost. In addition, it requires the relay lens optical system to include the light-receiving lens group having high NA in order to detect fluorescence sensitively. To increase NA, the microarray and a focal distance of the first lens need to be closer to each other, or a lens having a high effective aperture needs to be used as the first lens. However, the dichroic mirror and the first filter need to be installed between the microarray and the first lens considering the configuration of the relay lens optical system, that is, the focal distance cannot be narrowed down because it depends on the size of components and the spatial occupancy of installation jigs. On the other hand, when a lens having a high effective aperture needs to be used as the first lens, the diameter of the lens is specially designed, which makes the component cost expensive. **In** this case, the remaining five lenses in the relay lens optical system depending on the diameter of the first lens are also specially designed, which makes the component cost expensive.

In the fluorescence reading device of the comparative example, the refractive index of the lens medium is a function of the wavelength, which generates chromatic aberration. In the fluorescence reading device of the comparative example, there is a theoretical limit on the correction of chromatic aberration, and in a device for detecting a wide wavelength range, a device for observing multicolor fluorescence, or the like, the correction of chromatic aberration would be insufficient, which causes blur in the image.

Also in the fluorescence reading device of the comparative example, a number of components is as many as six in the relay lens optical system, so a high degree of expertise is required for assembling the device, which takes a very long time to adjust its optical axis. **In** addition, the optical axis adjustment requires numerous process steps in the periodic maintenance of the device or the non-ordinary maintenance against abnormalities in the optical axis. In addition, as a number of components increases, the risk of the shift of the optical axis depending on the positional shift of the components increases. In addition, the relay lens optical system with lenses requires an optical design with the wavelength as a parameter, which increases the design difficulty. In addition, in the relay lens optical system with lenses, ghosts may occur due to the reflection on the lens plane, or the device size in an optical axis direction unintentionally increases due to the configuration of the relay lens optical system.

Unlike the relay lens optical system the fluorescence reading device of the comparative example, the fluorescence reading device 100 according to the present embodiment includes the receiving optical system 300 described above. With the fluorescence reading device 100 according to the present embodiment, as an example, a number of components in the receiving optical system 300 can be two, the convex mirror 301 and the concave mirror 302, so the number of components can be reduced compared to the fluorescence reading device of the comparative example. In this way, it is possible to simplify the optical axis adjustment which requires a high degree of expertise and time in the assembly and the maintenance of the device, and the risk of the shift of the optical axis can be reduced.

In addition, with the fluorescence reading device 100 according to the present embodiment, unlike the relay lens optical system of the comparative example, the receiving optical system 300 does not depend on the wavelength, so the optical design is easy. In addition, with the fluorescence reading device 100 according to the present embodiment, the receiving optical system 300 does not have a lens, so there is no influence of ghosts by the lens. In addition, with the fluorescence reading device 100 according to the present embodiment, the device size of the receiving optical system 300 in the optical axis direction can be decreased compared to the relay lens optical system in the fluorescence reading device of the comparative example.

In addition, the fluorescence reading device 100 according to the present embodiment does not require a specially designed lens unlike the fluorescence reading device of the comparative example to detect fluorescence sensitively, and uses less expensive mirror components than the specially designed lens, so the cost can be reduced.

In addition, with the fluorescence reading device 100 according to the present embodiment, the simulation result in Fig. 3 shows that an aberration amount within a range of the angle of view of 3 mm square is approximately 2λ in the tangential direction, and the aberration amount in the fluorescence reading device of the comparative example is approximately 1λ, so the aberration amount in the fluorescence reading device 100 according to the present embodiment is twice that of the comparative example. To the extent that this aberration is acceptable, with the fluorescence reading device 100 according to the present embodiment, the influence of chromatic aberration is eliminated and the number of components of the receiving optical system 300 can be two, the convex mirror 301 and the concave mirror 302, thus the cost can be reduced compared to the fluorescence reading device of the comparative example using six lenses.

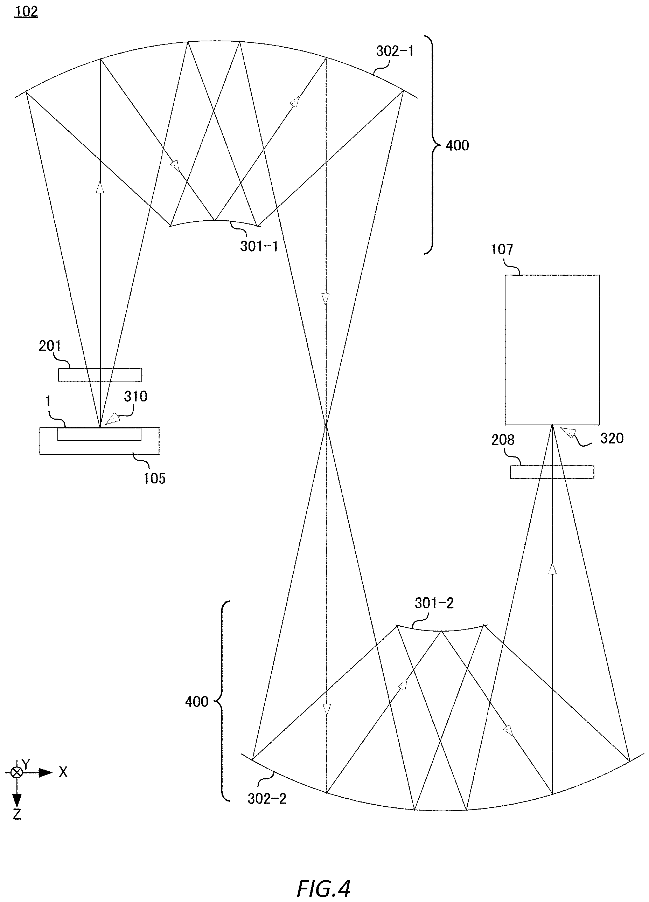

Fig. 4 schematically illustrates a configuration of a receiving optical system 400 in a fluorescence reading device 102 according to a second embodiment. The fluorescence reading device 102 according to the second embodiment differs from the fluorescence reading device 100 according to the first embodiment in that the fluorescence reading device 102 includes the receiving optical system 400 instead of the receiving optical system 300. Other components in the fluorescence reading device 102 according to the second embodiment are similar to those in the fluorescence reading device 100 according to the first embodiment, so they are provided with reference numerals similar to those of the corresponding components in the fluorescence reading device 100 according to the first embodiment to omit the duplicated description thereof.

Similarly to the receiving optical system 300, the receiving optical system 400 repeatedly reflects fluorescence emitted from the microarray 1 off a plurality of reflectors to form an image on the image-forming plane, and does not include a lens. The plurality of reflectors include a convex mirror and a concave mirror. In the present embodiment, the plurality of reflectors in the receiving optical system 400 include only two convex mirrors 301-1 and 301-2 and two concave mirrors 302-1 and 302-2.

As illustrated in Fig. 4, in the receiving optical system 400, a set of one convex mirror 301-1 and one concave mirror 302-1 and a set of one convex mirror 301-2 and one concave mirror 302-2 are arranged at positions conjugate to each other. Each of these sets consists of components similar to those in the receiving optical system 300 according to the first embodiment.

The observation plane of the microarray 1 is arranged at the focal plane position 310 of the light-receiving plane of the receiving optical system 400. In the receiving optical system 400, the fluorescence emitted from the microarray 1 is first reflected off the concave mirror 302-1, then reflected off the convex mirror 301-1, again reflected off the concave mirror 302-1, and forms an image at the focal point position. Subsequently, it is reflected off the concave mirror 302-2, then reflected off the convex mirror 301-2, again reflected off the concave mirror 302-2, and detected by the CCD camera 107 arranged at the focal point position 320 of the image-forming plane.

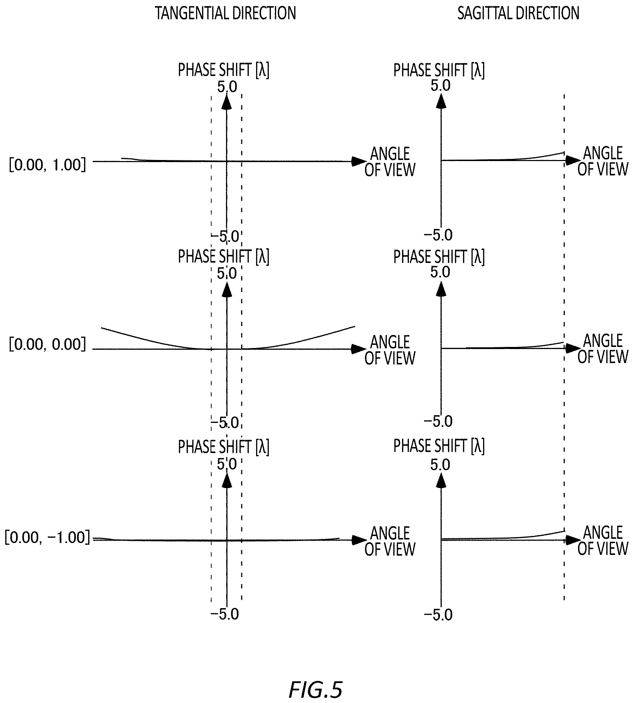

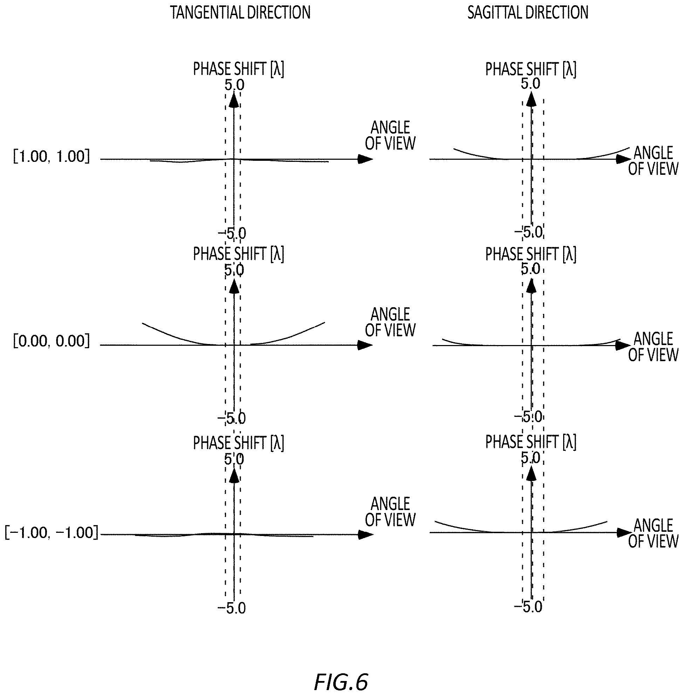

Fig. 5 and Fig. 6 each illustrate a result obtained by a simulation using the fluorescence reading device 102 according to the second embodiment. More specifically, Fig. 5 and Fig. 6 each illustrate a result obtained by a simulation in which the receiving optical system 400 in the fluorescence reading device 102 according to the second embodiment is configured with a radius of each of the concave mirrors 302-1 and 302-2 of R = 150, a radius of each of the convex mirrors 301-1 and 301-2 of R = 75, and a numerical aperture of NA = 0.22, wherein R is a radius of a spherical mirror.

Each graph in Fig. 5 and Fig. 6 illustrates a phase shift (λ) of fluorescence detected at a plurality of coordinate positions on the sensor plane, with a plurality of points in the sensor plane of the CCD camera 107 as origins. More specifically, in each graph in Fig. 5, changes in the phase shift (λ) are illustrated in cases where, considering each of (X, Y) = (0, 0), (0, -1.5), and (0, 1.5) on the sensor plane as an origin, coordinates of three points moved by (X, Y) = (0.00, 1.00), (0.00, 0.00), and (0.00, -1.00) from the origins on the sensor plane are further shifted respectively in a tangential direction and a sagittal direction, that is, cases where the angle of view is widened. In each graph in Fig. 6, changes in the phase shift (λ) are illustrated in cases where, considering each of (X, Y) = (0, 0), (-2, -1.5), and (2, 1.5) on the sensor plane as an origin, coordinates of three points moved by (X, Y) = (1.00, 1.00), (0.00, 0.00), and (-1.00, -1.00) from the origins on the sensor plane are further shifted respectively in a tangential direction and a sagittal direction, that is, cases where the angle of view is widened. A width of the angle of view in each graph corresponds to a size of an aperture of the optical system. Note that, since the phase shift is centrosymmetric in Fig. 5 as in Fig. 3, for the sagittal direction, the illustration of the negative side of the angle of view in each graph is omitted.

The simulation results in Fig. 5 and Fig. 6 show that, in the second embodiment, aberrations are corrected throughout the angle of view and the aberration amount within the range of the angle of view of 3 mm square is at most approximately 1λ. Accordingly, with the fluorescence reading device 102 according to the second embodiment, the aberration amount equivalent to that in the fluorescence reading device of the comparative example described above is feasible. The fluorescence reading device 102 according to the present embodiment has an effect similar to the fluorescence reading device 100 according to the first embodiment. With the fluorescence reading device 102 according to the present embodiment, for example, the influence of chromatic aberration is eliminated and a number of components of the receiving optical system 400 can be four, the two convex mirrors 301-1 and 301-2 and the two concave mirrors 302-1 and 302-2, thus the cost can be reduced compared to the fluorescence reading device of the comparative example using six lenses. Also with the fluorescence reading device 102 according to the present embodiment, it is possible to further decrease monochromatic aberrations compared to the fluorescence reading device 100 according to the first embodiment.

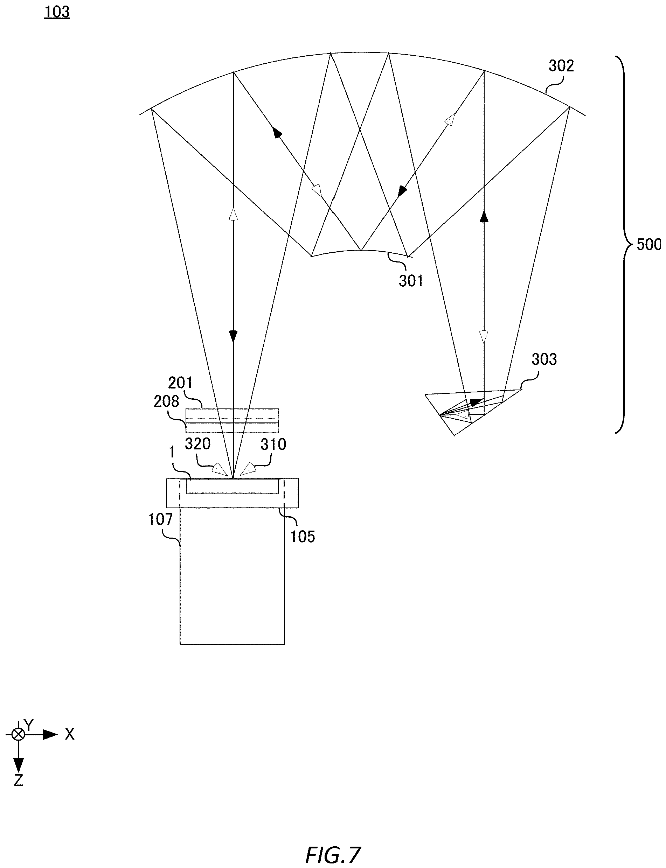

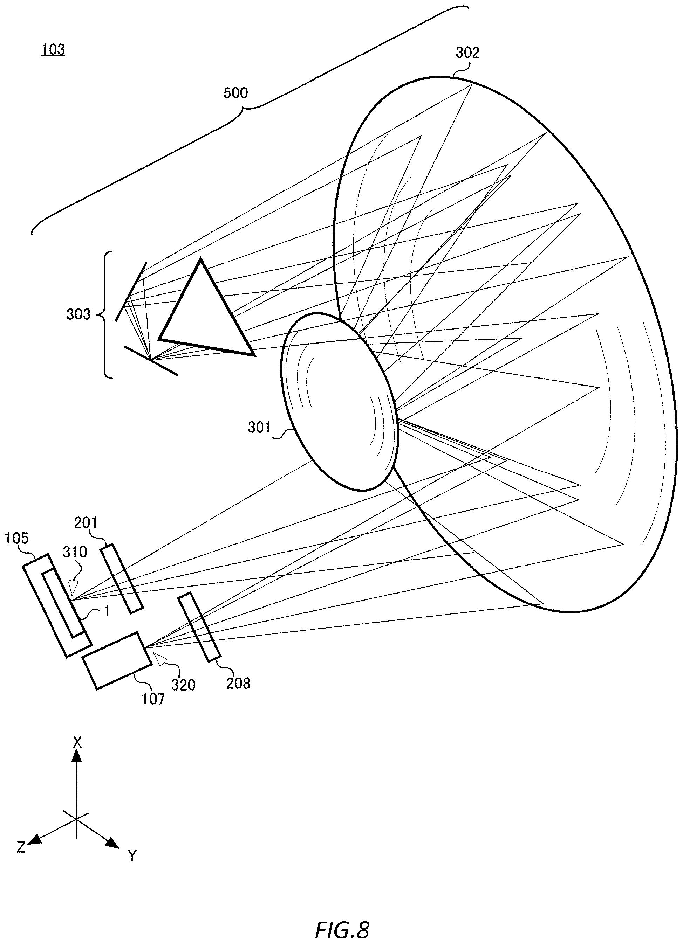

Fig. 7 schematically illustrates a configuration of a receiving optical system 500 in a fluorescence reading device 103 according to a third embodiment. Fig. 8 schematically illustrates a configuration of the receiving optical system 500 in the fluorescence reading device 103 according to the third embodiment. The fluorescence reading device 103 according to the third embodiment differs from the fluorescence reading device 100 according to the first embodiment in that the fluorescence reading device 103 includes the receiving optical system 500 instead of the receiving optical system 300. Other components in the fluorescence reading device 103 according to the third embodiment are similar to those in the fluorescence reading device 100 according to the first embodiment, so they are provided with reference numerals similar to those of the corresponding components in the fluorescence reading device 100 according to the first embodiment to omit the duplicated description thereof.

Similarly to the receiving optical system 300, the receiving optical system 500 repeatedly reflects fluorescence emitted from the microarray 1 off a plurality of reflectors to form an image on the image-forming plane, and does not include a lens. The plurality of reflectors include a convex mirror and a concave mirror. In the present embodiment, the plurality of reflectors in the receiving optical system 500 include only one convex mirror 301, one concave mirror 302, and one retroreflector 303.

As illustrated in Fig. 7 and Fig. 8, one convex mirror 301 and one concave mirror 302 in the receiving optical system 500 each consist of components similar to those of the receiving optical system 300 according to the first embodiment. In the receiving optical system 500, unlike the receiving optical system 300, fluorescence from the fluorescent molecules is caused to pass through the convex mirror 301 and the concave mirror 302 twice as each of a receiving side optical path and an image-forming side optical path.

The observation plane of the microarray 1 is arranged at the focal plane position 310 of the light-receiving plane of the receiving optical system 500. In the receiving optical system 500, the fluorescence emitted from the microarray 1 is first reflected off the concave mirror 302, then reflected off the convex mirror 301, again reflected off the concave mirror 302, and incident to the retroreflector 303. The fluorescence reflected off the retroreflector 303 is reflected off the concave mirror 302, then reflected off the convex mirror 301, again reflected off the concave mirror 302, and detected by the CCD camera 107 arranged at the focal point position 320 of the image-forming plane.

Note that the retroreflector 303 may be composed of one mirror component or may be composed of, e.g., three mirror components. In the present embodiment, the retroreflector 303 is a corner cube mirror composed of one mirror component having three planes. Note that it is illustrated as separated into three parts in Fig. 8 for clarity of the description only.

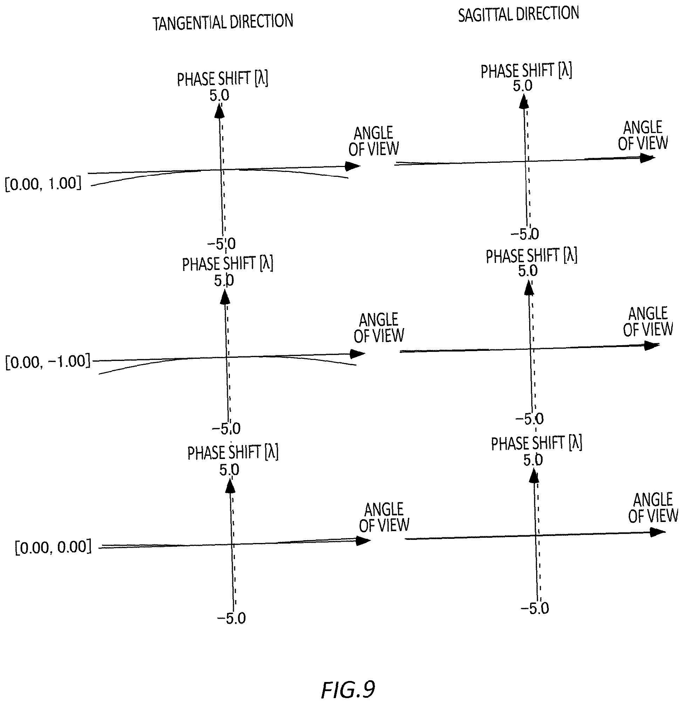

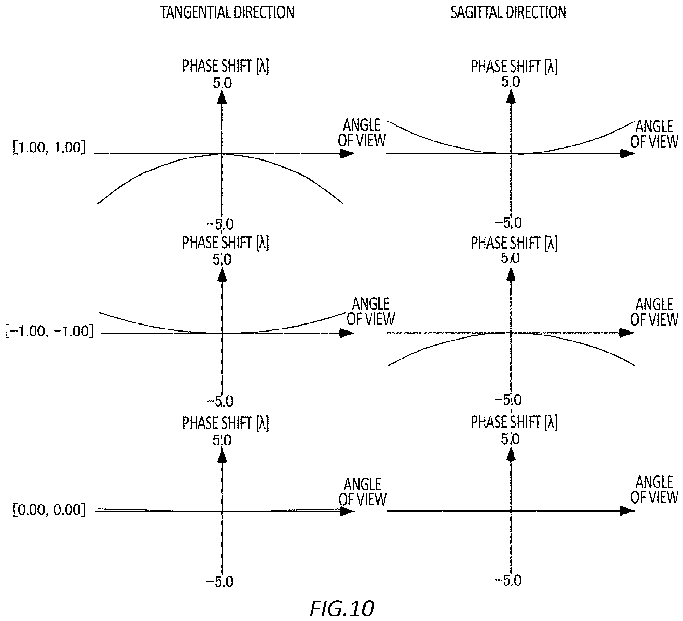

Fig. 9 and Fig. 10 each illustrate a result obtained by a simulation using the fluorescence reading device 103 according to the third embodiment. More specifically, Fig. 9 and Fig. 10 each illustrate a result obtained by a simulation in which the receiving optical system 500 in the fluorescence reading device 103 according to the third embodiment is configured with a radius of the concave mirror 302 of R = 150, a radius of the convex mirror 301 of R = 75, and a numerical aperture of NA = 0.22, wherein R is a radius of a spherical mirror.

Each graph in Fig. 9 and Fig. 10 illustrates a phase shift (λ) of fluorescence detected at a plurality of coordinate positions on the sensor plane, with a plurality of points in the sensor plane of the CCD camera 107 as origins. More specifically, in each graph in Fig. 9, changes in the phase shift (λ) are illustrated in cases where, considering each of (X, Y) = (0, 0), (0, -1.5), and (0, 1.5) on the sensor plane as an origin, coordinates of three points moved by (X, Y) = (0.00, 1.00), (0.00, -1.00), and (0.00, 0.00) from the origins on the sensor plane are further shifted respectively in a tangential direction and a sagittal direction, that is, cases where the angle of view is widened. In each graph in Fig. 10, changes in the phase shift (λ) are illustrated in cases where, considering each of (X, Y) = (0, 0), (-2, -1.5), and (2, 1.5) on the sensor plane as an origin, coordinates of three points moved by (X, Y) = (1.00, 1.00), (-1.00, -1.00), and (0.00, 0.00) from the origins on the sensor plane are further shifted respectively in a tangential direction and a sagittal direction, that is, cases where the angle of view is widened. A width of the angle of view in each graph corresponds to a size of an aperture of the optical system.

According to the simulation result in Fig. 10, signs of the phase shifts respectively in the tangential direction and the sagittal direction are opposite in the third embodiment as in the first embodiment, that is, astigmatism is dominant as aberrations and appears centrosymmetrically. The simulation results in Fig. 9 and Fig. 10 show that the aberration amount within the range of the angle of view of 3 mm square is approximately 2λ, in the tangential direction and approximately 1λ, in the sagittal direction. The aberration amount in the tangential direction in the fluorescence reading device 103 according to the present embodiment is twice that of the comparative example. The fluorescence reading device 103 according to the present embodiment has an effect similar to the fluorescence reading device 100 according to the first embodiment. To the extent that this aberration is acceptable, with the fluorescence reading device 103 according to the present embodiment, for example, the influence of chromatic aberration is eliminated and a number of components of the receiving optical system 500 can be three, the convex mirror 301, the concave mirror 302, and the retroreflector 303, thus the cost can be reduced compared to the fluorescence reading device of the comparative example using six lenses. Also with the fluorescence reading device 103 according to the present embodiment, it is possible to further decrease monochromatic aberrations compared to the fluorescence reading device 100 according to the first embodiment.

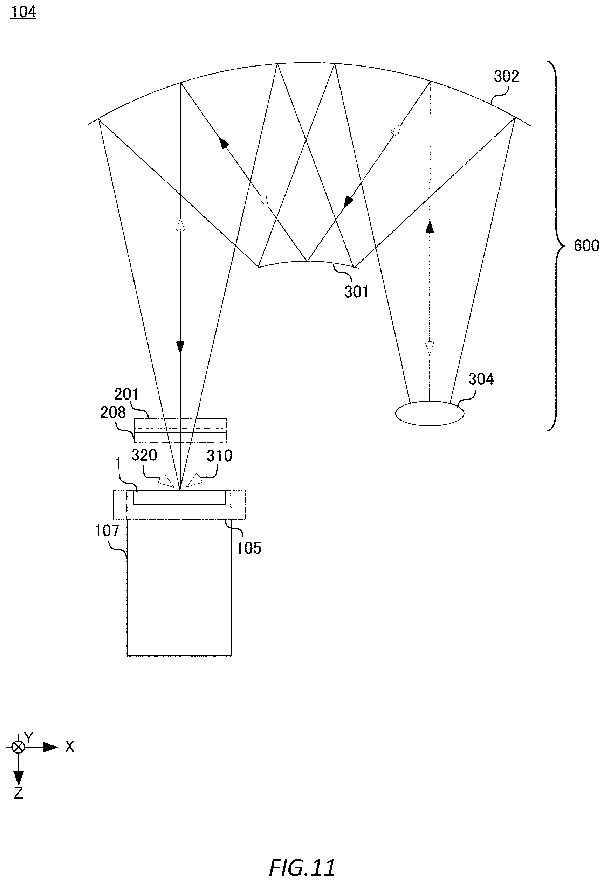

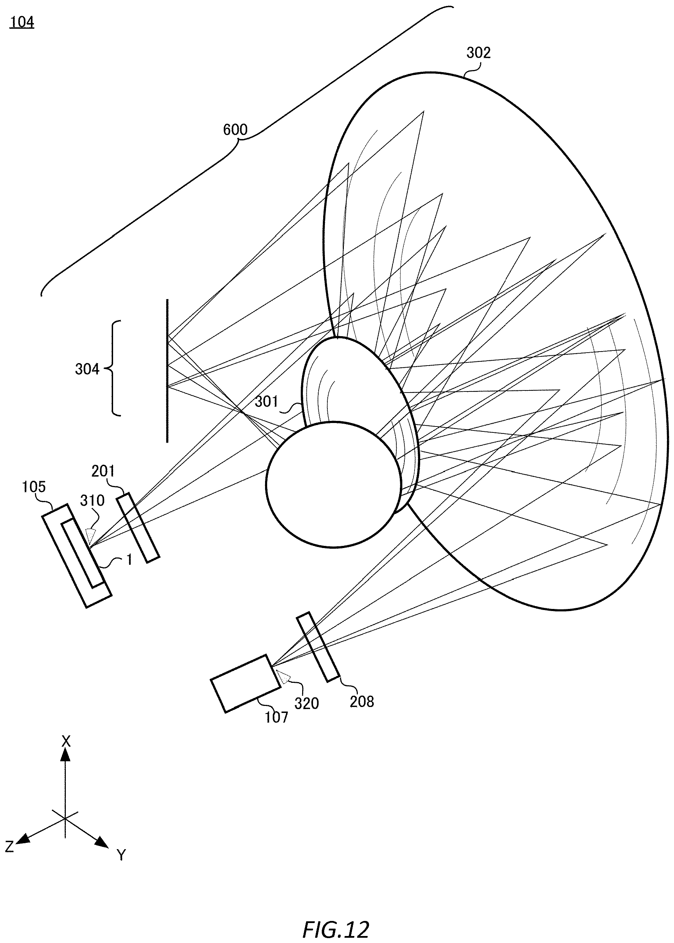

Fig. 11 schematically illustrates a configuration of a receiving optical system 600 in a fluorescence reading device 104 according to a fourth embodiment. Fig. 12 schematically illustrates a configuration of the receiving optical system 600 in the fluorescence reading device 104 according to the fourth embodiment. The fluorescence reading device 104 according to the fourth embodiment differs from the fluorescence reading device 100 according to the first embodiment in that the fluorescence reading device 104 includes the receiving optical system 600 instead of the receiving optical system 300. Other components in the fluorescence reading device 104 according to the fourth embodiment are similar to those in the fluorescence reading device 100 according to the first embodiment, so they are provided with reference numerals similar to those of the corresponding components in the fluorescence reading device 100 according to the first embodiment to omit the duplicated description thereof.

Similarly to the receiving optical system 300, the receiving optical system 600 repeatedly reflects fluorescence emitted from the microarray 1 off a plurality of reflectors to form an image on the image-forming plane, and does not include a lens. The plurality of reflectors include a convex mirror and a concave mirror. In the present embodiment, the plurality of reflectors in the receiving optical system 600 include only one convex mirror 301, one concave mirror 302, and one right-angle reflector 304.

As illustrated in Fig. 11 and Fig. 12, one convex mirror 301 and one concave mirror 302 in the receiving optical system 600 each consist of components similar to those of the receiving optical system 300 according to the first embodiment. In the receiving optical system 600, unlike the receiving optical system 300, fluorescence from the fluorescent molecules is caused to pass through the convex mirror 301 and the concave mirror 302 twice as each of a receiving side optical path and an image-forming side optical path.

The observation plane of the microarray 1 is arranged at a focal plane position 310 of the light-receiving plane of the receiving optical system 600. In the receiving optical system 600, the fluorescence emitted from the microarray 1 is first reflected off the concave mirror 302, then reflected off the convex mirror 301, again reflected off the concave mirror 302, and incident to the right-angle reflector 304. The fluorescence reflected off the right-angle reflector 304 is reflected off the concave mirror 302, then reflected off the convex mirror 301, again reflected off the concave mirror 302, and detected by the CCD camera 107 arranged at the focal point position 320 of the image-forming plane.

Note that the right-angle reflector 304 may be composed of one mirror component or may be composed of, e.g., two mirror components. The angle of incidence of fluorescence into the mirror component in the right-angle reflector 304 is not particularly limited as long as the right-angle reflector 304 can reflect fluorescence toward the concave mirror 302, and in the present embodiment, the right-angle reflector 304 is composed of two mirror components, the two mirror components being two flat mirrors which are each arranged with the angle of incidence of 90°.

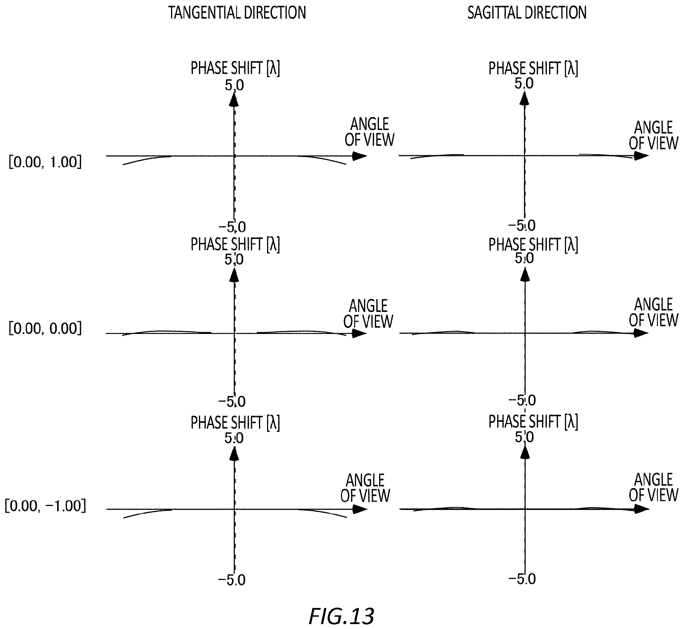

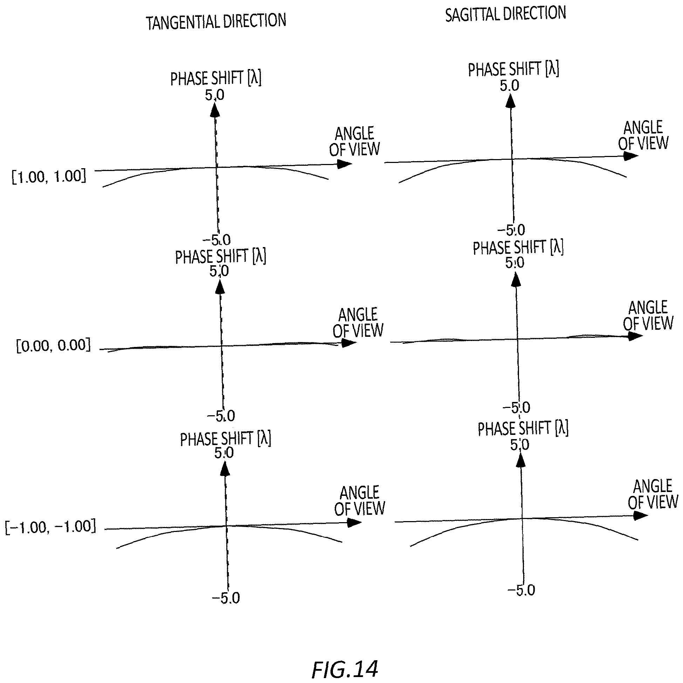

Fig. 13 and Fig. 14 each illustrate a result obtained by a simulation using the fluorescence reading device 104 according to the fourth embodiment. More specifically, Fig. 13 and Fig. 14 each illustrate a result obtained by a simulation in which the receiving optical system 600 in the fluorescence reading device 104 according to the fourth embodiment is configured with a radius of the concave mirror 302 of R = 150, a radius of the convex mirror 301 of R = 75, and a numerical aperture of NA = 0.22, wherein R is a radius of a spherical mirror.

Each graph in Fig. 13 and Fig. 14 illustrates a phase shift (λ) of fluorescence detected at a plurality of coordinate positions on the sensor plane, with a plurality of points in the sensor plane of the CCD camera 107 as origins. More specifically, in each graph in Fig. 13, changes in the phase shift (λ) are illustrated in cases where, considering each of (X, Y) = (0, 1.5), (0, 0), and (0, -1.5) on the sensor plane as an origin, coordinates of three points moved by (X, Y) = (0.00, 1.00), (0.00, 0.00), and (0.00, -1.00) from the origins on the sensor plane are further shifted respectively in a tangential direction and a sagittal direction, that is, cases where the angle of view is widened. In each graph in Fig. 14, changes in the phase shift (λ) are illustrated in cases where, considering each of (X, Y) = (-2, -1.5), (0, 0), and (2, 1.5) on the sensor plane as an origin, coordinates of three points moved by (X, Y) = (1.00, 1.00), (0.00, 0.00), and (-1.00, -1.00) from the origins on the sensor plane are further shifted respectively in a tangential direction and a sagittal direction, that is, cases where the angle of view is widened. A width of the angle of view in each graph corresponds to a size of an aperture of the optical system.

The simulation result in Fig. 13 shows that, in the fourth embodiment, aberrations are corrected throughout the angle of view and the aberration amount within the range of the angle of view of 3 mm square is at most approximately 1λ. Accordingly, with the fluorescence reading device 104 according to the fourth embodiment, the aberration amount equivalent to that in the fluorescence reading device of the comparative example described above is feasible. The fluorescence reading device 104 according to the present embodiment has an effect similar to the fluorescence reading device 100 according to the first embodiment. With the fluorescence reading device 104 according to the present embodiment, for example, the influence of chromatic aberration is eliminated and a number of components of the receiving optical system 600 can be four, the convex mirror 301, the concave mirror 302, and the right-angle reflector 304 consisting of the two flat mirrors, thus the cost can be reduced compared to the fluorescence reading device of the comparative example using six lenses. Also with the fluorescence reading device 103 according to the present embodiment, it is possible to further decrease monochromatic aberrations compared to the fluorescence reading device 100 according to the first embodiment. Note that, when the right-angle reflector 304 is composed of one component, the number of components in the receiving optical system 600 can be three.

While the present invention has been described by way of the embodiments, the technical scope of the present invention is not limited to the above-described embodiments. It is apparent to persons skilled in the art that various alterations or improvements can be made to the above-described embodiments. It is also apparent from description of the claims that the embodiments to which such modifications or improvements are made may be included in the technical scope of the present invention.

It should be noted that each process of the operations, procedures, steps, stages, and the like performed by the apparatus, system, program, and method shown in the claims, specification, or drawings can be executed in any order as long as the order is not indicated by "prior to", "before", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

1: microarray;
100: fluorescence reading device;
101: laser light source;
102: irradiation optical system;
103: mirror;
104: dichroic mirror;
105: stage;
107: CCD camera;
201: first barrier filter;
208: second barrier filter;
210: principal ray;
300: receiving optical system;
301: convex mirror;
302: concave mirror;
310: focal point position of the light-receiving plane;
320: focal point position of the image-forming plane;
102: fluorescence reading device;
400: receiving optical system;
301-1: convex mirror;
302-1: concave mirror;
301-2: convex mirror;
302-2: concave mirror;
103: fluorescence reading device;
500: receiving optical system;
303: retroreflector;
104: fluorescence reading device;
600: receiving optical system;
304: right-angle reflector.

## Claims

1. A fluorescence reading device which acquires fluorescence from a microarray, comprising:
a receiving optical system which repeatedly reflects fluorescence emitted from the microarray off a plurality of reflectors to form an image on an image-forming plane; and
an optical sensor located on the image-forming plane.

2. The fluorescence reading device according to claim 1, wherein the fluorescence reading device is a telecentric optical system in which an image-capturing plane of the microarray and the image-forming plane are the same in size.

3. The fluorescence reading device according to claim 1 or 2, wherein the receiving optical system does not include a lens.

4. The fluorescence reading device according to any one of claims 1 to 3, wherein the plurality of reflectors include a convex mirror and a concave mirror.

5. The fluorescence reading device according to claim 4, wherein the convex mirror and the concave mirror each are a spherical mirror.

6. The fluorescence reading device according to claim 4, wherein the plurality of reflectors include only one convex mirror, which is identical to the convex mirror, and one concave mirror, which is identical to the concave mirror.

7. The fluorescence reading device according to claim 4, wherein the plurality of reflectors include only two convex mirrors, each of which is identical to the convex mirror, and two concave mirrors, each of which is identical to the concave mirror.

8. The fluorescence reading device according to claim 4, wherein the plurality of reflectors include only one convex mirror, which is identical to the convex mirror, one concave mirror, which is identical to the concave mirror, and one retroreflector.

9. The fluorescence reading device according to claim 4, wherein the plurality of reflectors include only one convex mirror, which is identical to the convex mirror, one concave mirror, which is identical to the concave mirror, and one right-angle reflector.

10. A fluorescence reading method for acquiring fluorescence from a microarray, comprising:
repeatedly reflecting fluorescence emitted from the microarray off a plurality of reflectors in a receiving optical system to form an image on an image-forming plane; and
receiving the fluorescence by an optical sensor located on the image-forming plane.
